# EUROPEAN PATENT APPLICATION

(11) **EP 4 844 468 A1**
(43) Date of publication of application: **25.11.2026**
(21) Application number: 26180421.5
(22) Date of filing: 21.05.2026
(51) Int. Cl.: G02B 23/24, F01D 21/00, G01N 21/954

(54) **BORESCOPE TRACKING SYSTEM & METHOD**

(30) Priority: 21.05.2025 IN 202511048960; 11.07.2025 US 202519266483
(71) Applicant: Pratt & Whitney Canada Corp., Longueuil, Québec J4G 1A1 (CA)
(72) Inventor: PALAHALLI, Varun, (01BE5) Longueuil, J4G 1A1 (CA); JANGALE, Abhay Ajit, (01BE5) Longueuil, J4G 1A1 (CA); SRINIVASAN, Srinikethan, (01BE5) Longueuil, J4G 1A1 (CA); BYNOE, Lee, (01BE5) Longueuil, J4G 1A1 (CA)
(74) Representative: Dehns

(57) **Abstract**

A borescope system (20) adapted for inspecting a component (C) of a gas turbine engine (10) includes a borescope cable (30) having two or more transmitters (35) at spaced apart locations thereon, and a mobile support (22) having an arcuate portion (24) sized to at least partially surround the engine (10) and having receivers (25) arranged as an array (A). The mobile support (22) is displaceable relative to the engine (10) to position the array (A) of receivers (25) at a selected axial position. The array (A) of receivers (25) are operable to receive signals from the transmitters (35) on the borescope cable (30). A controller (70) is in communication with the receivers (25) to: determine real-time positions of the transmitters (35) based on signals received by the receivers (25); determine a position and orientation of a probe tip (34) of the borescope cable (30) within the engine (10); and determining a location of the component (C) seen by the camera (38) and depicted on the display (40).

## Description

### TECHNICAL FIELD

The disclosure relates generally to systems and methods for inspecting gas turbine engines and, more particularly, to borescope inspection systems.

### BACKGROUND

Aircraft engines are inspected during engine maintenance procedures. Borescope inspections are often used for engine inspection and maintenance procedures, wherein a borescope system is used to conduct visual inspections of internal portions of the engine without needing to fully disassemble the engine.

However, challenges exists in accurately identifying certain parts within the engine when using a borescope, and the accuracy of the results is highly dependent upon the skill of the operator of the borescope system. For example, when inspecting vanes or other components that are circumferentially spaced apart within an enclosed casing, it can be particularly challenging to determine which vane is which and thus which vane is being visually inspected at any one time by the camera of the borescope system.

### SUMMARY

In an aspect of the present invention, there is accordingly provided a borescope system adapted for inspecting a component of a gas turbine engine defining a longitudinal central axis, the borescope system comprising: a borescope cable adapted to be inserted into the gas turbine engine via an access port, the borescope cable extending between a proximal end connected to a display and a distal end defining a probe tip of the borescope cable, the probe tip including a camera having a focal length extending away from the probe tip, the camera being in communication with the display via the borescope cable, the display depicting, in real time, an image of the component seen by the camera; two or more transmitters fixed on an outer surface of the borescope cable at spaced apart locations thereon, each of the transmitters being disposed a respective distance away from the probe tip of the borescope cable; a mobile support having an arcuate portion sized to at least partially surround the gas turbine engine and having receivers mounted thereon and arranged as an array, the mobile support being displaceable relative to the gas turbine engine to position the array of receivers at a selected axial position relative to the longitudinal central axis, the array of receivers being operable to receive signals from the transmitters on the borescope cable; and a controller in communication with the receivers, the controller having a processing unit and a computer-readable medium operatively connected to the processing unit and having instructions stored thereon executable by the processing unit to: determine real-time positions of the transmitters, relative to one or both of the receivers and the gas turbine engine, based on signals received by the receivers; determine a position and orientation of the probe tip of the borescope cable within the gas turbine engine, using the real-time positions of the transmitters; and using the position and orientation of the probe tip of the borescope cable and the focal length of the camera located at the probe tip, determining a location of the component seen by the camera and depicted on the display, relative to a rest of the gas turbine engine.

The borescope system as defined above and described herein also includes, in certain embodiments, one or more of the following features, in whole or in part, and in any combination.

In an embodiment of the above, the computer-readable medium of the controller has instructions stored thereon executable by the processing unit to: calculate a spline formed by the real-time positions of the transmitters; and use the spline to determine a shape of the borescope cable within the gas turbine engine.

In an embodiment according to any of the previous embodiments, a first transmitter and a second transmitter of the two or more transmitters are located adjacent the probe tip of the borescope cable, the first transmitter and the second transmitter defining a straight line axis extending therebetween that also intersects the probe tip.

In an embodiment according to any of the previous embodiments, the first transmitter and the second transmitter are located in close proximity to each other such that the borescope cable is substantially rigid therebetween.

In an embodiment according to any of the previous embodiments, the two or more transmitters include at least a third transmitter, a first distance between the first and second transmitters being smaller than a second distance between the second transmitter than the third transmitter.

In an embodiment according to any of the previous embodiments, computer-readable medium has instructions stored thereon executable by the processing unit to cause the controller to determine the location of the component based on a three-dimensional model of the gas turbine engine.

In an embodiment according to any of the previous embodiments, the determining of the position within the gas turbine engine of the probe tip of the borescope cable further includes determining a length of the borescope cable extending from the access port and the probe tip.

In an embodiment according to any of the previous embodiments, the array includes at least three receivers of said receivers, the at least three receivers being equally circumferentially spaced apart.

In an embodiment according to any of the previous embodiments, the arcuate portion of the mobile support is an annular ring sized and shaped to circumferentially surround an outer casing of the gas turbine engine.

In an embodiment according to any of the previous embodiments, the annular ring is adjustable to vary an inner diameter of the annular ring.

In an embodiment according to any of the previous embodiments, the arcuate portion of the mobile support is fastened relative to the gas turbine engine to fix the arcuate portion of the mobile support in place during inspection of the component.

In an embodiment according to any of the previous embodiments, the receivers all lie in a plane transverse to the longitudinal central axis.

In an embodiment according to any of the previous embodiments, each of the transmitters transmits a distinct radio frequency signal that is captured by the receivers.

In an embodiment according to any of the previous embodiments, determining the location of the component includes determining at least a circumferential position of the component within the gas turbine engine.

In another aspect of the present invention, there is also provided a method of determining a location of a component within a gas turbine engine using a borescope system, the method comprising: transmitting, from two or more transmitters mounted on a borescope cable, signals indicative of a respective location of each of the two or more transmitters, the borescope cable including a probe tip having a camera communicating with a display, the borescope cable being inserted within a casing of the gas turbine engine via an access port to inspect the component using the camera; receiving, by an array of receivers, the signals produced by the transmitters, the array of receivers being mounted on a mobile support positioned outside the casing of the gas turbine engine at an axial position relative to a longitudinal central axis of the gas turbine engine, the array of receivers lying in a plane transverse to the longitudinal central axis; determining, by a controller in communication with the array of receivers, a location of each of the transmitters within the gas turbine engine based on the signals; determining, by the controller, a position and orientation the probe tip of the borescope cable within the gas turbine engine using the location of each of the transmitters and a known relative position of the probe tip with respect to each of the transmitters; and determining, by the controller, the location within the gas turbine engine of the component depicted on the display of the borescope system using the position and orientation of the probe tip and a focal length of the camera located at the probe tip.

In another aspect of the present invention, there is further provided a method of determining a location of a component within a gas turbine engine using a borescope system, the method comprising: inserting a borescope cable within a casing of the gas turbine engine via an access port, the borescope cable having two or more first communication devices mounted thereon, the borescope cable including a camera at a probe tip, the camera communicating with a display; positioning a mobile support outside the casing of the gas turbine engine at an axial position relative to a longitudinal central axis of the gas turbine engine, the mobile support including an array of second communication devices lying in a plane transverse to the longitudinal central axis; wirelessly communicating between the first communication devices and the second communication devices and determining, using a controller, a location of each of the first communication devices within the gas turbine engine based on signals transmitted between the first communication devices and the second communication devices; determining, using the controller, a position within the gas turbine engine of the probe tip of the borescope cable relative to the first communication devices; and determining, using controller, a location within the gas turbine engine of the component depicted on the display based on the position of the probe tip and a focal length of the camera located at the probe tip.

The methods as defined above and described herein also include, in certain embodiments, one or more of the following features and/or steps, in whole or in part, and in any combination.

In an embodiment of the above, the determining of the position of the probe tip includes determining at least a circumferential position of the probe tip.

In an embodiment according to any of the previous embodiments, the method further comprises calculating, by the controller, a spline formed by the locations of the transmitters, and using the spline to determine a shape of the borescope cable within the gas turbine engine.

In an embodiment according to any of the previous embodiments, the method further comprises providing for display, by the controller, a three-dimensional model of the gas turbine engine, wherein the position and orientation of the probe tip is displayed as a visual indicator within the three-dimensional model.

In an embodiment according to any of the previous embodiments, the method further comprises fixing the mobile support to an outer surface of the casing at the axial position, the axial position corresponding to a known section of the gas turbine engine containing the component.

In an embodiment according to any of the previous embodiments, the method further comprises identifying, by the controller, a virtual location of the probe tip within a three-dimensional model of the gas turbine engine corresponding to the position and orientation of the probe tip within the gas turbine engine in real time, and providing for display, by the controller, the three-dimensional model of the gas turbine engine and the virtual location of the probe tip.

It should be understood that any or all of the features or embodiments described herein can be used or combined in any combination with each and every other feature or embodiment described herein unless expressly noted otherwise.

### BRIEF DESCRIPTION OF THE DRAWINGS

Reference is now made to the accompanying figures in which:
FIG. 1 is a schematic cross sectional view of a gas turbine engine;
FIG. 2A is a side view of a mobile support of a borescope system in accordance with one or more embodiments of the present disclosure;
FIG. 2B is a front view of the mobile support of the borescope system of FIG. 2A;
FIG. 3 is a partial side view of the borescope system, showing multiple communication devices (e.g., transmitters or receivers) mounted to the borescope cable;
FIG. 4A is a schematic, partial cross-sectional view showing the borescope cable of FIG. 3 within the gas turbine engine of FIG. 1 during a borescope inspection of the gas turbine engine, with the mobile support of FIGS. 2A-2B surrounding the gas turbine engine;
FIG. 4B depicts a spline generated from the respective positions of the communication devices located on the borescope cable, to thereby define a virtual cable shape by the borescope system;
FIG. 5A depicts a tip of the borescope capable of FIGS. 3 and 4A, when inspecting a component of the gas turbine engine;
FIG. 5B depicts a calculation made by the borescope system to determine component location based on a determined position of the tip of borescope cable;
FIG. 6 depicts a triangulation method used by the borescope system to locate a position of a communication device of the borescope in real time;
FIG. 7 depicts a flow chart of a method in accordance with an aspect of the present disclosure;
FIG. 8 depicts a flow chart of a method in accordance with another aspect of the present disclosure; and
FIG. 9 depicts a computing device used to implement the method(s) as described herein.

### DETAILED DESCRIPTION

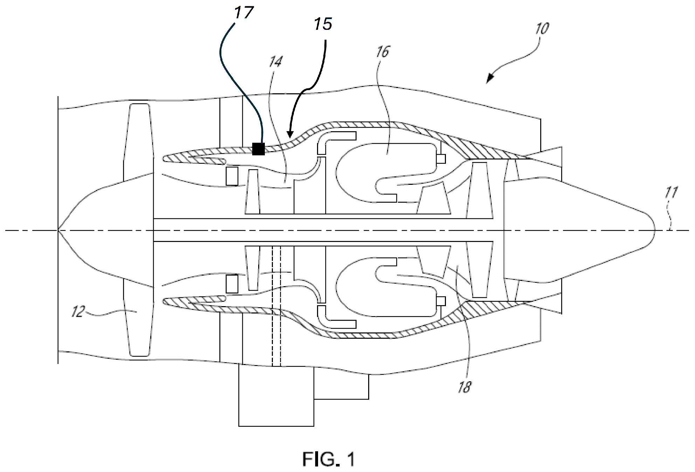

FIG. 1 illustrates a gas turbine engine 10 (or simply "engine" 10) of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. A longitudinal central axis 11 extends longitudinally through a centerline of the engine 10. Any references to axial directions, radial directions, and circumferential directions herein are made relative to the longitudinal central axis 11 of the engine 10.

A borescope system 20 will be described herein that is used to inspect internal components of the engine 10. Borescope inspections are performed during maintenance procedures to observe (i.e., visually inspect) internal components of the engine 10, such as vanes, blades, seals, or other features that would otherwise be difficult to access without partial or complete disassembly. A challenge when conducting borescope inspections is that the operator must discern which vane or blade is being viewed, which can be particularly challenging in the case of circumferentially repeating arrays of airfoils. The present borescope system 20 addresses these challenges by providing real-time positional and directional information to the operator regarding a borescope probe tip inside the engine 10, thereby enabling a more accurate identification of the component that is being visually inspected by the borescope. The borescope system 20 may be particularly useful, for example, in accurately determining a precise circumferential position of the probe tip of the borescope cable and thus the component of the engine being visually inspected, in real time, by the camera of the borescope system.

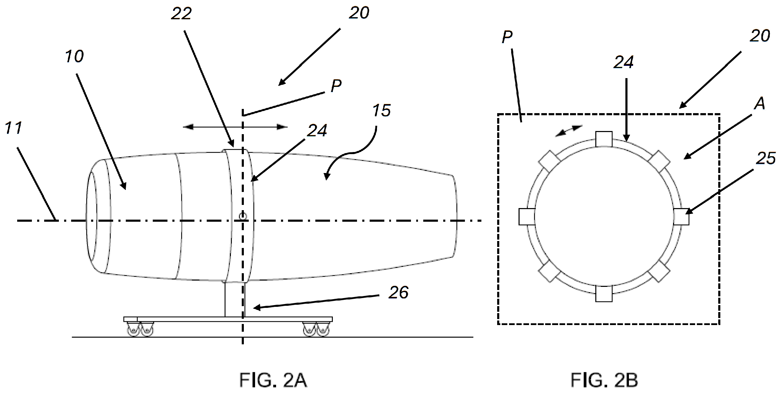

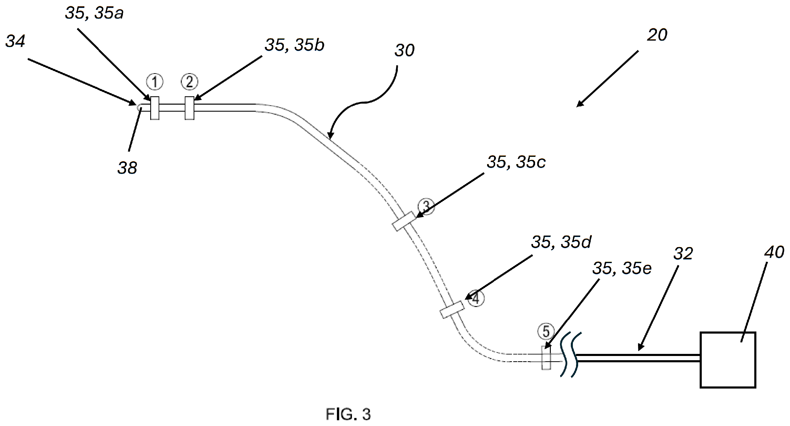

With reference to FIGS. 2A-2B and 3, the borescope system 20 (which may also be referred to as a borescope tracking system) in accordance with one or more embodiments of the present disclosure includes generally a mobile support 22 (FIGS. 2A-2B) and a borescope cable 30 (FIG. 3), which are in wireless communication with each other as will be described in further detail below. The term "wireless communication" as defined herein, in the context of the communication between the transmitters and the receivers of the present borescope system is understood to mean any time of non-wired (i.e. "wireless" in the literal sense of the word) communication between the transmitters and the receivers. This wireless communication between the transmitters and the receives includes, in a particular embodiment, radio frequency (RF) communication. However, other types of wireless communication may also be used, such as acoustic communication, sonar communication, near field communication, Bluetooth ^{™} communication, and the like.

As shown in FIGS. 2A-2B, the mobile support 22 includes an arcuate portion 24, which in certain embodiments may be a fully annular ring, that is sized and shaped to at last partially (or fully) surround the engine 10, and more particularly an outer casing 15 thereof. This arcuate portion 24 is mounted on a rolling base 26 that is displaceable along the length of the engine 10 during a set-up process, namely in a generally axial direction relative to the longitudinal central axis 11 of the engine 10. As such, the arcuate portion 24 of the mobile support 22 can be positioned as required at a desired axial position relative to the engine 10. Generally, the arcuate portion 24 of the mobile support 22 will be positioned such that it is substantially aligned, axially, with a component or group of components to be inspected using the borescope system 20. For example, if the high pressure compressor vanes of the engine 10 are being inspected with the borescope system 20, the mobile support 22 will be displaced and positioned such that the arcuate portion 24 is substantially axially aligned with, and located radially outward of, the high pressure vanes within the outer casing 15 of the engine 10.

During inspection with the borescope system 20, the mobile support is configured to be fixed in place such that axial movement thereof is prevented. This may include, for example only, using integrated flanges and/or fasteners for fastening the arcuate portion 24 of the mobile support 22 in place onto an outer surface of the outer casing 15 of the engine 10, such that it cannot move relative to the casing. As such, the arcuate portion 24 is disposed at a fixed and selected station or axial position along the length of the engine 10, relative to the longitudinal central axis 11. In certain embodiments, the arcuate portion 24 may be adjustable in diameter (i.e., its inner diameter), such as to accommodate and conform to different engine models and/or sizes of engines, or so as to better conform to different axial positions on the same engine. The arcuate portion 24 may thus include an adjustable ring having an adjustable inner diameter.

The mobile support 22 accordingly forms, in a particular embodiment, a mobile and adjustable ring frame which can be placed circumferentially around an engine 10, at a desired station (i.e., axial position there along). The station location is demarcated, along with a recommended ring size of the arcuate portion 24. The station location along with the engine variant is fed into a controller 70 of the borescope system 20 (as will be described further below) as inputs. The controller 70 of the borescope system 20 is then able to calibrate the borescope probe tip location with the engine type and stage, thereby allowing the identification of static components.

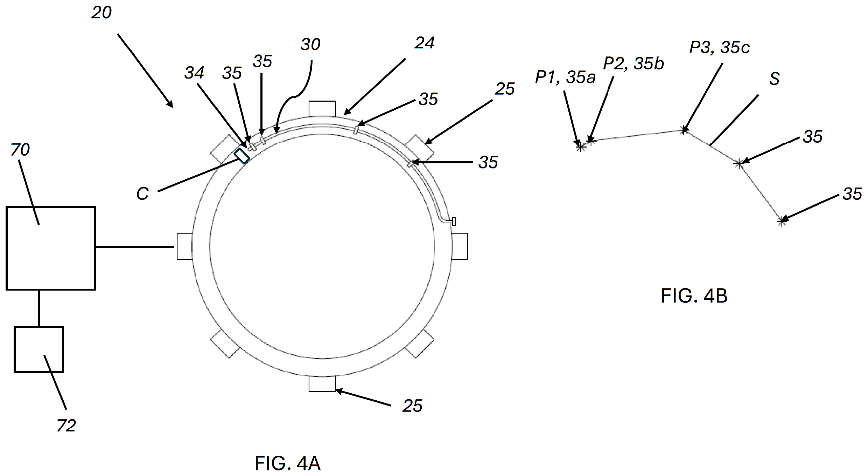

In all cases, and as shown in FIGS. 2B and 4A, the arcuate portion 24 of the mobile support 22 has a plurality of communication devices 25 mounted thereon and arranged in an array. In a particular embodiment, the communication devices 25 mounted on the mobile support 22 are receivers 25, which are configured to receive wireless signals from associated transmitters 35 mounted on the borescope cable 30, as will be described below. The communication devices 25 of the mobile support 22 are static wireless communication devices, which may also be referred to herein as "second communication devices", wherein the communication devices 35 mounted on the borescope cable 30 (as shown in Fig. 3) may be referred to herein as "first communication devices". Accordingly, although the second communication devices 25 mounted on the mobile support 22 may be referred to hereinbelow as receivers 25, and the first communication devices 35 mounted on the borescope cable 30 may be referred to hereinbelow as transmitters 35, it is to be understood that in alternate embodiments these communication devices can be reversed - i.e., that transmitters are mounted on the mobile support 22 and receivers are mounted on the borescope cable 30.

Referring particularly to FIG. 2B, the receivers 25 mounted on the arcuate portion 24 of the mobile support 22 are arranged in a receiver array A, wherein the receivers 25 are circumferentially spaced apart about the annular arcuate portion 24. In a particular embodiment, the receivers form a ring array of receivers 25 that lie in a plane P. The plane P within which the receivers 25 of the array lie is generally transverse, and in certain embodiments perpendicular to, the longitudinal central axis 11 of the engine 10. Alternately, in other embodiments more than one axial row of receivers may also be provided, in which case the receivers of each axial row may lie in a common plane, with multiple such planes provided. The receivers 25 are circumferentially spaced apart by a specified distance, which may be selected as required to form a desired array of the receivers. In one embodiment, the receivers 25 may be equally spaced apart, however this is not necessary. Each receiver 25 of the receiver array A is configured to wirelessly communication with the transmitters 35 of the borescope cable 30, and more particular to receive wireless signals therefrom. At least three receivers 25 are provided within the array, such as to permit triangulation of the signals produced by the transmitters 35, as will be described in further detail below.

Referring now to FIG. 3, the borescope cable 30 of the borescope system 20 is depicted. The borescope cable 30 is configured to be inserted into the engine 10 via an access port 17 (see FIG. 1), such as to inspect internal components of the engine 10. The borescope cable 30 extends between a proximal end 32 connected to a display 40 and a distal end defining a tip 34 (which may also be referred to herein as a probe tip 34) of the borescope cable 30. The tip 34 includes a camera 38, which is in hard-wired communication with the display 40 via internal communication links (e.g., wiring, fiber optical cables, etc.) contained within the borescope cable 30. The display 40 may be distinct from, or integrated with, the controller 70 of the borescope system 20 and its display 72 (as described in further detail below, with reference to FIG. 4A.)

The two or more transmitters 35 mounted on the borescope cable 30 are each fixed in position to an outer surface of the borescope cable 30 at respective spaced apart locations thereon. In the depicted embodiment, the borescope cable 30 includes 5 transmitters, namely transmitters 35a to 35e, however fewer or more (e.g., 10) can also be used. In typical embodiments, between 2 and 10 (inclusively) transmitters will be most likely used. Thus, each of the transmitters 35 is located a different and respective distance away from the probe tip 34 of the borescope cable 30.

At least two of the transmitters 35 are located adjacent the probe tip 34 of the cable, for example as per transmitters 35a and 35b in FIG. 3. The first transmitter 35a is mounted directly behind the probe tip 34 of the borescope cable 30. These first two transmitters 35 are also positioned in close proximity to each other, adjacent the probe tip. The term "close proximity", as used in the context, means that the second transmitter 35b is mounted closely behind the first transmitter 35a , with a distance between them sufficiently small to so as prevent the borescope cable from flexing (e.g., bend) therebetween. Or, stated differently, such that the borescope cable is substantially rigid (i.e., cannot flex) between the first and second transmitters. Accordingly, a first distance between the first two transmitters (transmitters 35a and 35b in FIG. 3) at the distance end of the borescope cable 30 is less than a second distance between transmitter 35b and transmitter 35c as shown in FIG. 3. In certain embodiments, the gap or distance between the first two transmitters (i.e., those located closest to the tip 34 of the borescope cable 30) is smaller than a gap between any two other transmitters along the length of the cable.

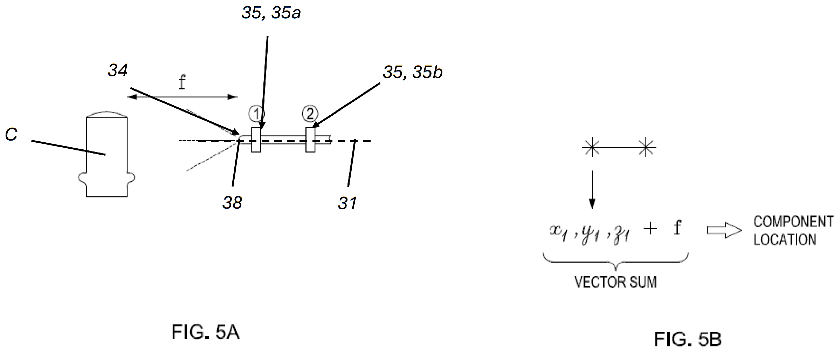

The first and second transmitters 35a, 35b are of particular significance, since the first transmitter 35a provides the probe tip position, and the second transmitter 35b, forming a straight line along axis 31 (see FIG. 5A) with the first transmitter 35a, gives the direction of view. Knowing the focal length f of the camera 38 at the probe tip 34, the component C being viewed can be located knowing the position of the first transmitter and the direction (as seen in FIGS. 5A-5B).

Accordingly, as seen in FIG. 3 and 5A for example, a first transmitter 35a is positioned proximate the probe tip 34 and a second transmitter 35b is located at a short distance behind the first transmitter 35a. The first transmitter 35a provides the main reference for determining the location of the probe tip 34. The second transmitter 35b is in alignment with the first transmitter 35a and the probe tip 34, such that a straight-line axis 31 extending centrally between the first transmitter 35a and the second transmitter 35b also intersects the probe tip 34. By determining the real-time locations of the first and second transmitters 35a, 35b, therefore, an instantaneous direction of the probe tip's field of view can be determined by the borescope system 20. Additional transmitters 35c, 35d, 35e can be spaced at known distances further along the borescope cable 30 - for example, at intervals of one meter, two meters, three meters, and so forth.

Each of the transmitters 35 is operable to transmit a distinct wireless signal (e.g., at a different frequency or within a distinct frequency band) that is captured by the receivers 25 mounted on the mobile support 22 located outside of the engine casing 15, and more particularly radially outward of the transmitters when the borescope cable 30 is inserted into the engine 10 for inspection of the internal components. As noted above, in a particular embodiment, the transmitters 35 may be configured for radio-frequency (RF) transmission, acoustic transmission, or other suitable modes of wireless communication. In a particular embodiment, RF transmitters and receivers are used, as this allows for efficient penetration into the metal casings and other components of the engine 10, with minimal losses. In the depicted embodiment of FIG. 3, five transmitters 35 are provided on the borescope cable 30, each configured to transmit within a unique frequency band. These distinct signals are captured by the receivers 25 of the surrounding receiver array A.

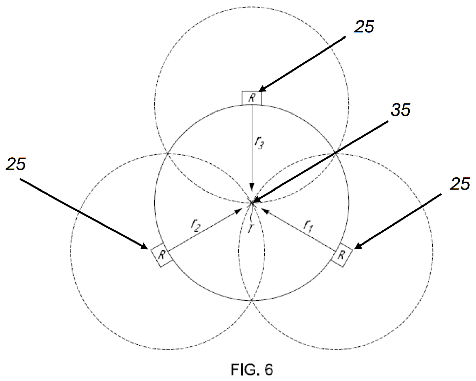

Referring particularly to FIG. 6, the manner in which the borescope system 20, and more particularly a controller 70 thereof, determines a position in space of each of the transmitters 35 is depicted. Each transmitter 35 repeatedly emits RF signals (e.g., pings) analogous to sonar pulses. Each receiver 25 on the mobile support 22 surrounding the engine 10 detects the emitted signals received from each of the transmitters 35, and measures an arrival time and/or signal strength associated with each transmitter 35. For depicting this, in FIG. 6 three receivers 25 have been shown and one transmitter 35 placed on the probe tip 34 is shown. The principle of locating the probe involves triangulation, and remains the same for all transmitters. Each transmitter 35 repeatedly pings. The time taken to receive each ping by each of the receivers 25 is recorded. This generates a radius of distance for each receiver 25. The intersection points of these circles, as shown in FIG. 6, provides the triangulated position of the transmitter 35, and therefore the probe. Multiple receivers 25 help in the accuracy of this triangulation. Knowing the relative position of the probe, with the receivers, and the stage number that the frame is positioned to, the probe position can be evaluated with respect to pre-set static component locations and can be visualized through a 3D model/circumferential model animation, etc. Accordingly, the computer-readable medium of the controller has instructions stored thereon that are executable by the processing unit to cause the controller to determine the location of the component based on a, and in relation to, a three-dimensional model of the gas turbine engine. This three-dimensional (3D) model can be stored in a memory accessible by the controller, for example. The memory can be can be a local hard drive (to the controller) or a remote one. Any type of memory access for the controller is possible as long as provides the functionality described herein. In other embodiments, however, a 3D model may not be used or needed.

Based on the signals received by the receivers 25, therefore, a controller 70 (see FIG. 4A) executes the triangulation or other position-determination algorithm to determine the real-time position of each transmitter 35, based on the signals received and captured by the receivers 25. Where three or more receivers 25 are distributed around the arcuate portion 24 of the mobile support 22 at known, calibrated circumferential locations, the intersection of the measured distances to each transmitter 35 enables accurate localization of the transmitter 35 in the circumferential direction and radially relative to the longitudinal engine axis 11.

Referring back FIGS. 4A and 4B, the controller 70 of the borescope system 20 uses the determined real-time positions of each of the transmitters 35 to calculate a spline S (see FIG. 4B), based on the individual determined points P1 to P5 (which correspond to transmitters 35a to 35e, respectively) in space of the transmitters 35, the calculated spline S thereby representing the shape and routing of the borescope cable 30 as it extends through the engine 10. More transmitters help in creating a smoother spline, thereby capturing the path of the cable more accurately (as seen in FIG. 4B).

Referring particularly to FIGS. 4A and 5A, depiction is made of how an operator might use the borescope cable 30 to view a stationary component C, such as a turbine vane or stator for example. Once the controller 70 of the borescope system 20 determines the real-time, three-dimensional position of the probe tip 34, and its orientation which determines the direction in which the camera is pointed (which are determined based on the determined relative positions of the first and second transmitters 35a, 35b), this data is correlated, using the controller 70, with an internal mapping of the known locations of static engine components at various stages in the gas turbine engine 10. The result is that the operator can be shown on a display 72 or a software interface, in communication with the controller 70, exactly which vane, blade, or seal of the engine is visible to the borescope's camera 38 located at the probe tip 34.

This is accomplished by taking into account the known focal length f of the camera 38 (see FIGS. 5A-5B) located at the probe tip 34. The borescope system 20 incorporates the camera's focal length f or known geometry of the lens attachment of the camera 38 to determine distances from the camera 38 at the probe tip 34 to the component C being inspected. The position of the probe tip is determined using triangulation, as described above. To determine the position of the object being viewed by the camera, the system includes the focal length of the camera as a vector, based on the location of the first and second transceivers at the borescope tip. Consequently, the circumferential position of the component C is determined, based on the determined position of the probe tip 34 and the vector based on the location of the first and second transceivers at the borescope tip and the focal length of the camera.

FIG. 5A shows an isolated view of the probe tip 34 of the borescope cable 30 when inspecting a component C within the engine 10 (not shown in FIG. 5A), focusing on the geometry of the borescope lens and/or camera focal length f, alignment between the first transmitter 35a and second transmitter 35b, and how those data points determine line-of-sight. By identifying the direction vector from the first transmitter 35a to the second transmitter 35b, and correlating that vector with the known camera lens offset or orientation, the system calculates the precise vector in which the borescope camera is looking. Accordingly, a precise determination of the location of the component C being inspected, and in particular its circumferential position within the engine, is identified by the borescope system 20 in real time. This can be particularly useful for identifying which part of a stator or which discrete segment of an array of airfoils is being examined.

Referring collective to FIGS. 4A-5B, the controller 70 of the borescope system 20 is therefore in communication with the receivers 25, and includes a processing unit and a computer-readable medium operatively connected to the processing unit and having instructions stored thereon executable by the processing unit to carrying out steps which enable the system to determine one or more of a position (including, in particular a circumferential position) of the probe tip 34 of the borescope cable 30 in real-time, when inspecting a component C within the engine 10, and a position (including, in particular a circumferential position) of the component C itself.

More particularly, the controller 70 is configured to: determine real-time positions of the transmitters 35 of the borescope cable 30 based on signals transmitted by the receivers 25 to the controller 70; determine a position of the probe tip 34 of the borescope cable 30 within the engine 10, in real-time, using the real-time positions of the transmitters 35; and using the position of the probe tip 34 of the borescope cable 30 and the known focal length f of the camera 38 located at the probe tip 34, determining a location (and in particular, at least a circumferential) within the engine 10 of the component C depicted on the display 40 and/or 72.

In certain embodiments, the controller 70 is also able to calculate the spline S, as described above, formed by the real-time positions of the transmitters 35. The calculated spline S is used as an additional output of the system, and is generated by connecting the determined positions of the transmitters. The system is thus operable to determine a path or a shape of the borescope cable 30 within the engine.

In certain embodiments, the controller 70 may also use a determined length of the borescope cable 30 that has been inserted into the casing of the engine via the access port 17, as one of the input parameters used for determining of the position within the engine of the probe tip 34 of the borescope cable 30.

Additionally, in certain embodiments, the controller 70 of the borescope system 20 is configured to provide, via the display 72 for example, a three-dimensional model of the engine 10, wherein the determined position of the probe tip 34 of the borescope cable is displayed as a visual indicator within the three-dimensional model on the display 72. Accordingly, the controller 70 is thereby configured to identify a virtual location of the probe tip 34 within the three-dimensional model of the engine corresponding to the real-time position of the probe tip 34 within the engine 10. The controller 70 can display the three-dimensional model of the engine 10 and this virtual location of the probe tip, wherein the virtual location of the probe tip is displayed as a visual indicator within the three-dimensional model of the gas turbine engine.

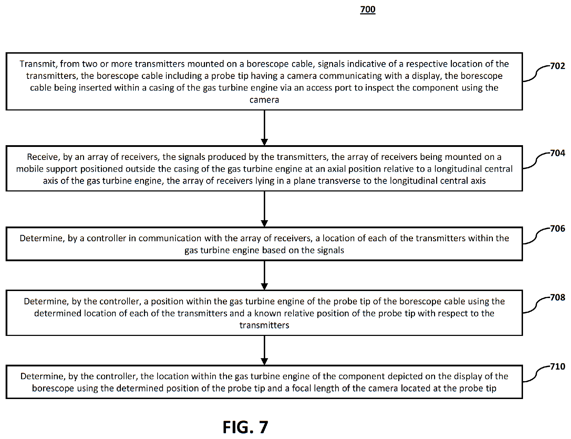

Referring now to Fig. 7, a method 700 of determining a location of a component, such as a vane or rotor blade, seal, etc., within a gas turbine engine 10 using the borescope system 20 is depicted. The method 700 includes, at step 702, transmitting, from two or more transmitters mounted on a borescope cable, signals indicative of a respective location of each of the two or more transmitters. The borescope cable includes a probe tip having a camera communicating with a display, and the borescope cable is inserted within a casing of the gas turbine engine via an access port to inspect the component using the camera.

At step 704, the method 700 includes receiving, by an array of receivers, the signals produced by the transmitters. The array of receivers are mounted on a mobile support positioned outside the casing of the gas turbine engine at an axial position relative to a longitudinal central axis of the gas turbine engine, with the array of receivers lying in a plane transverse to the longitudinal central axis.

At step 706, the method 700 includes determining, by a controller in communication with the array of receivers, a location of each of the transmitters within the gas turbine engine based on the signals.

At step 708, the method 700 includes determining, by the controller, a position within the gas turbine engine of the probe tip of the borescope cable using the determined location of each of the transmitters and a known relative position of the probe tip with respect to the transmitters.

And, at step 710, the method 700 includes determining, by the controller, the location within the gas turbine engine of the component depicted on the display of the borescope using the determined position of the probe tip and a focal length of the camera located at the probe tip.

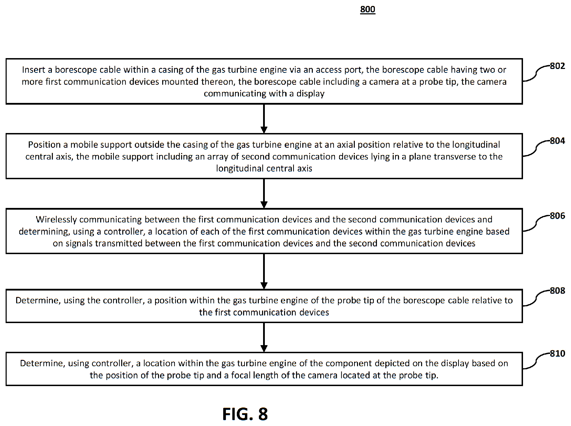

Referring now to Fig. 8, a method 800 of determining a location of a component, such as a vane or rotor blade for example, within the gas turbine engine 10 using the borescope system 20 is depicted. The method 800 includes, at step 802, inserting the above-referenced borescope cable within the casing of the gas turbine engine via an access port.

At step 804, the method includes positioning a mobile support outside the casing of the gas turbine engine at an axial position relative to the longitudinal central axis. The mobile support includes an array of second communication devices lying in a plane transverse to the longitudinal central axis.

At step 806, the method includes wirelessly communicating between the first communication devices and the second communication devices and determining, using the controller, a location of each of the first communication devices within the gas turbine engine based on signals transmitted between the first communication devices and the second communication devices.

At step 808, the method includes determining, using the controller, a position within the gas turbine engine of the probe tip of the borescope cable relative to the first communication devices.

At step 810, the method 800 further includes determining, using the controller, a location within the gas turbine engine of the component depicted on the display based on the position of the probe tip and a focal length of the camera located at the probe tip.

In other aspects, the method can include the steps of: (i) emitting signals from each transmitter 35 on the borescope cable 30; (ii) receiving these signals at each receiver 25 of the mobile support 22 having a known geometry relative to the engine 10; (iii) measuring time-of-flight or other suitable signal parameters to determine the range (distance) between each transmitter 35 and each receiver 25; (iv) solving for the three-dimensional position of each transmitter 35, for example using triangulation based on one or more circles or spheres of intersection as derived from the measured distances; and (v) computing the location and orientation of the probe tip 34 of the borescope cable 30 from the transmitter data. Once the probe tip's position is known, the system can retrieve or generate a three-dimensional or circumferential model of the engine component or region being inspected and overlay a visual indicator of the probe tip 34 and local geometry (e.g., of the component) on a display in real time.

In another embodiment, a method, used in conjunction with the borescope system 20, further includes a first step of calibrating or zeroing out coordinate values, by referencing a known location or alignment within the engine 10. The system can then sequentially scan each transmitter to generate position data, store that data in memory 904, and compare it to the known geometry of the engine 10 for identification of the location being viewed. If the borescope probe tip 34 is advanced to a new location, the borescope system 20 repeats the process of measuring and mapping. The operator's display 40 and/or 72 is updated continuously with a three-dimensional or cutaway view of the engine 10 to show precisely where the inspection is taking place.

Various modifications of the illustrated concept(s) are feasible. For example, while radio-frequency signals (RF) are described in detail, other forms of wireless communication, such as near-field communication, acoustic or sonar pings, or even optical signals, could be used if they sufficiently penetrate the engine casing or other structures. Similarly, although the arcuate portion of the mobile support 22 is shown as a circumferential support for the receivers 25, the arcuate portion or ring 24 can be replaced or supplemented by receiver modules that mount directly to borescope ports 17 distributed around the engine 10. Still further, additional transmitters can be added to the borescope cable 30 for more accurate spline calculations of the cable path. Conversely, a simpler system may operate with fewer transmitters if approximate circumferential positioning is acceptable.

In operation, an inspector can insert the borescope cable 30 through a borescope port 17 in the engine 10 and enable the tracking system/method of the borescope system 20 as described herein. Each transmitter 35 begins emitting signals that are collectively detected by the receivers 25. The controller 70 processes these signals to generate real-time location information for each transmitter 35, and by extension the shape and location of the borescope cable 30. Using the geometry determined for the first transmitter 35a and second transmitter 35b, the borescope system 20 calculates the position and/or angular direction of the probe tip 34. The user then sees, on the display 40/72, not only the live camera feed (showing the component C being inspected) but also a 3D or stored schematic of the relevant engine stage with a highlighted region or part number for the component being viewed. The determined probe tip position is thus able to be compared to known, static component locations, based on the engine architecture, thereby allowing for identification and display of the probe location and the component being viewed.

The present system may thus improve the reliability of borescope inspection by reducing operator error in identifying circumferential locations and in labeling components. This allows for more consistent and repeatable inspections, as well as easier navigation to targeted problem areas within the engine 10. In addition, the approach is adaptable across multiple engine models or variants by changing the ring frame's adjustable diameter, the signal processing calibration data, or the borescope port locations provided to the controller. Because the fundamental triangulation principle remains the same for different engines, the disclosed system can be readily integrated into various gas turbine product lines.

The embodiments described provide a flexible and robust way to locate, in real time, a borescope probe tip and the direction of that tip when used for gas turbine engine inspections. By combining multiple transmitters on the borescope cable with an array of receivers circumferentially spaced in a plane around the engine, the system obtains high-accuracy triangulation. The resulting real-time tracking significantly reduces the difficulty and time required for inspections, contributing to more thorough diagnostics and faster maintenance turnaround.

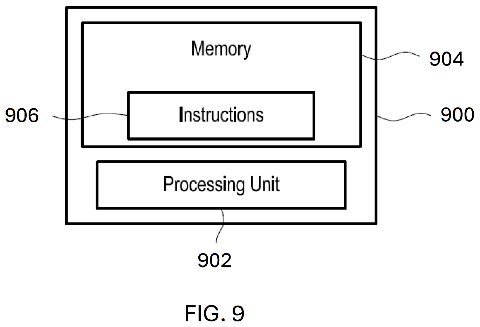

With reference to Fig. 9, the method 700 described above may be implemented using a computing device 900. For simplicity only one computing device 900 is shown but the system may include more computing devices 900 operable to exchange data. The computing devices 900 may be the same or different types of devices. The controller 70 of the borescope system as describe herein may be implemented with one or more computing devices 900.

The computing device 900 comprises a processing unit 902 and a memory 904 which has stored therein computer-executable instructions 906.

In certain embodiments, the computing device 900 (which may form part of, or be integrated with, the controller 70) is disposed in communication with the receivers 25 to run position-determination algorithms. When the instructions 906 of the computing device 900 are executed, the positions of the transmitters are updated in real time, enabling dynamic tracking of the borescope cable while the user manipulates it through various access ports of the engine. Thus, the operator receives immediate feedback on the circumferential and axial location of the probe tip of the borescope cable, as well as orientation data about which direction the tip is facing.

The processing unit 902 may comprise any suitable devices configured to implement the method described herein such that instructions 906, when executed by the computing device 900 or other programmable apparatus, may cause the functions/acts/steps performed as part of the method as described herein to be executed. The processing unit 902 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 904 may comprise any suitable known or other machine-readable storage medium. The memory 904 may comprise non-transitory computer readable storage medium, for example, but not limited to, an electronic, magnetic, optical, electromagnetic, infrared, or semiconductor system, apparatus, or device, or any suitable combination of the foregoing. The memory 904 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 904 may comprise any storage means (e.g., devices) suitable for retrievably storing machine-readable instructions 906 executable by processing unit 902.

The methods and systems described herein may be implemented in a high level procedural or object oriented programming or scripting language, or a combination thereof, to communicate with or assist in the operation of a computer system, for example the computing device 900. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit 902 of the computing device 900, to operate in a specific and predefined manner to perform the functions described herein, for example those described in the method described herein. Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein can be implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The technical solution of embodiments may be in the form of a software product. The software product may be stored in a non-volatile or non-transitory storage medium, which can be a compact disk read-only memory (CD-ROM), a USB flash disk, a removable hard disk or remote storage such as cloud based storage. The software product includes a number of instructions that enable a computer device (personal computer, server, or network device) to execute the methods provided by the embodiments.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Thus, it will be appreciated by persons of ordinary skill in the art that the borescope tracking system described herein and the variations thereof offer substantial advantages in time efficiency, accuracy of component identification, and cross-compatibility between different stages or models of gas turbine engines. Further, it will be recognized that the illustrative embodiments set forth above, including particular shapes, sizes, materials, or particular types of wireless signals, can be modified while still achieving the described functionality. The present system and method of circumferentially locating the borescope probe may help to reduce the time, effort and error in locating, labeling and inspecting the vanes/blades in a gas turbine engine during a borescope inspection. The use of the mobile, adjustable support enables this technology to be applied across multiple stages of the gas turbine engine and across multiple families of products.

It will be understood that the above description is exemplary only, and that other configurations consistent with the teachings presented may fall within the scope of the appended claims. The embodiments described herein can be modified to include additional or alternative features. While multiple features or components are illustrated, it should be understood that certain features may be combined into a single functional element or that a single feature may be subdivided. Unless otherwise stated, all of the described features and steps may be combined with one another in any technically feasible manner.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

Features from separate embodiments described herein may be combined to form other embodiments. It is also noted that terms such as "first," "second," "third," and the like are used merely as labels, and are not intended to impose any limitation on their order or arrangement.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A borescope system (20) adapted for inspecting a component (C) of a gas turbine engine (10) defining a longitudinal central axis (11) , the borescope system (20) comprising:
a borescope cable (30) adapted to be inserted into the gas turbine engine (10) via an access port (17), the borescope cable (30) extending between a proximal end (32) connected to a display (40) and a distal end defining a probe tip (34) of the borescope cable (30), the probe tip (34) including a camera (38) having a focal length (f) extending away from the probe tip (34), the camera (38) being in communication with the display (40) via the borescope cable (30), the display (40) depicting, in real time, an image of the component (C) seen by the camera (38);
two or more transmitters (35) fixed on an outer surface of the borescope cable (30) at spaced apart locations thereon, each of the transmitters (35) being disposed a respective distance away from the probe tip (34) of the borescope cable (30);
a mobile support (22) having an arcuate portion (24) sized to at least partially surround the gas turbine engine (10) and having receivers (25) mounted thereon and arranged as an array (A), the mobile support (22) being displaceable relative to the gas turbine engine (10) to position the array (A) of receivers (25) at a selected axial position relative to the longitudinal central axis (11), the array of receivers (25) being operable to receive signals from the transmitters (35) on the borescope cable (30); and
a controller (70) in communication with the receivers (25), the controller (70) having a processing unit and a computer-readable medium operatively connected to the processing unit and having instructions stored thereon executable by the processing unit to:
determine real-time positions of the transmitters (35), relative to one or both of the receivers (25) and the gas turbine engine (10), based on signals received by the receivers (25);
determine a position and orientation of the probe tip (34) of the borescope cable (30) within the gas turbine engine (10), using the real-time positions of the transmitters (35); and
using the position and orientation of the probe tip (34) of the borescope cable (30) and the focal length (f) of the camera (38) located at the probe tip (34), determining a location of the component (C) seen by the camera (38) and depicted on the display (40), relative to a rest of the gas turbine engine (10).

2. The borescope system as defined in claim 1, wherein the computer-readable medium of the controller (70) has instructions stored thereon executable by the processing unit to: calculate a spline (S) formed by the real-time positions of the transmitters (35); and use the spline (S) to determine a shape of the borescope cable (30) within the gas turbine engine (10).

3. The borescope system as defined in claim 1 or 2, wherein a first transmitter (35a) and a second transmitter (35b) of the two or more transmitters (35) are located adjacent the probe tip (34) of the borescope cable (30), the first transmitter (35a) and the second transmitter (35b) defining a straight line axis (31) extending therebetween that also intersects the probe tip (34).

4. The borescope system as defined in claim 3, wherein the first transmitter (35a) and the second transmitter (35b) are located in close proximity to each other such that the borescope cable (30) is substantially rigid therebetween, and/or wherein the two or more transmitters (35) include at least a third transmitter (35c), a first distance between the first and second transmitters (35a,b) being smaller than a second distance between the second transmitter (35b) than the third transmitter (35c).

5. The borescope system as defined in any of the preceding claims, wherein computer-readable medium has instructions stored thereon executable by the processing unit to cause the controller (70) to determine the location of the component (C) based on a three-dimensional model of the gas turbine engine (10).

6. The borescope system as defined in any of the preceding claims, wherein the determining of the position within the gas turbine engine (10) of the probe tip (34) of the borescope cable (30) further includes determining a length of the borescope cable (30) extending from the access port (17) and the probe tip (34).

7. The borescope system as defined in any of the preceding claims, wherein the array (A) includes at least three receivers (25) of said receivers (25), the at least three receivers (25) being equally circumferentially spaced apart.

8. The borescope system as defined in any of the preceding claims, wherein the arcuate portion (24) of the mobile support (22) is an annular ring sized and shaped to circumferentially surround an outer casing (15) of the gas turbine engine (10), and optionally, wherein the annular ring is adjustable to vary an inner diameter of the annular ring and/or the arcuate portion (24) of the mobile support (22) is fastened relative to the gas turbine engine (10) to fix the arcuate portion (24) of the mobile support (22) in place during inspection of the component (C).

9. The borescope system as defined in any of the preceding claims, wherein the receivers (25) lie in a plane (P) transverse to the longitudinal central axis (11).

10. The borescope system as defined in any of the preceding claims, wherein each of the transmitters (35) is configured to transmit a distinct radio frequency signal that is captured by the receivers (25).

11. The borescope system as defined in any of the preceding claims, wherein determining the location of the component (C) includes determining at least a circumferential position of the component (C) within the gas turbine engine (10).

12. A method of determining a location of a component (C) within a gas turbine engine (10) using a borescope system (20), the method comprising:
transmitting, from two or more transmitters (35) mounted on a borescope cable (30), signals indicative of a respective location of each of the two or more transmitters (35), the borescope cable (30) including a probe tip (34) having a camera (38) communicating with a display (40);
receiving, by an array (A) of receivers (25), the signals produced by the transmitters (35), the array (A) of receivers (25) being mounted on a mobile support (22) positioned outside the casing (15) of the gas turbine engine (10) at an axial position relative to a longitudinal central axis (11) of the gas turbine engine (10), the array (A) of receivers (25) lying in a plane (P) transverse to the longitudinal central axis (11);
determining, by a controller (70) in communication with the array (A) of receivers (25), a location of each of the transmitters (35) within the gas turbine engine (10) based on the signals;
determining, by the controller (70), a position and orientation the probe tip (34) of the borescope cable (30) within the gas turbine engine (10) using the location of each of the transmitters (35) and a known relative position of the probe tip (34) with respect to each of the transmitters (35); and
determining, by the controller (70), the location within the gas turbine engine (10) of the component (C) depicted on the display (40) of the borescope system (20) using the position and orientation of the probe tip (34) and a focal length (f) of the camera (38) located at the probe tip (34).

13. The method of claim 12, wherein the determining of the position of the probe tip (34) includes determining at least a circumferential position of the probe tip (34).

14. The method of claim 12 or 13, further comprising calculating, by the controller (70), a spline (S) formed by the locations of the transmitters (35), and using the spline (S) to determine a shape of the borescope cable (30) within the gas turbine engine (10).

15. The method of any of claims 12 to 14, further comprising:
providing for display (40), by the controller (70), a three-dimensional model of the gas turbine engine (10), wherein the position and orientation of the probe tip (34) is displayed as a visual indicator within the three-dimensional model; and/or
identifying, by the controller (70), a virtual location of the probe tip (34) within a three-dimensional model of the gas turbine engine (10) corresponding to the position and orientation of the probe tip (34) within the gas turbine engine (10) in real time, and providing for display (40), by the controller (70), the three-dimensional model of the gas turbine engine (10) and the virtual location of the probe tip (34).
